# EUROPEAN PATENT APPLICATION

(11) **EP 4 631 802 A1**
(43) Date of publication of application: **15.10.2025**
(21) Application number: 23818552.4
(22) Date of filing: 13.11.2023
(51) Int. Cl.: B60T 1/10, B60T 8/17, B60T 8/1766, B60T 8/26, B60T 8/32

(54) **BRAKE SYSTEM AND SADDLE-RIDING TYPE VEHICLE**

(30) Priority: 07.12.2022 JP 2022195870
(71) Applicant: Robert Bosch GmbH, 70442 Stuttgart (DE)
(72) Inventor: FELLMETH, Martin Reiner, Yokohama-shi, Kanagawa 224-8501 (JP); MANNHERZ, Edith, Yokohama-shi, Kanagawa 224-8501 (JP)
(74) Representative: Isarpatent
(86) International application number: PCT/IB2023/061427
(87) International publication number: WO 2024/121652

(57) **Abstract**

The invention has a purpose of providing a brake system for a straddle-type vehicle capable of improving safety of the straddle-type vehicle during braking.

A brake system 100 for a two-wheeled motor vehicle 10 includes: a front-wheel brake mechanism 20 that brakes a front wheel 3; a rear-wheel brake mechanism 40 that brakes a rear wheel 4; and an operation element 11 operated by a rider. The front-wheel brake mechanism 20 includes a friction brake mechanism 21 that generates a friction braking force only on the front wheel 3, and can generate the friction braking force in response to motion of the operation element 11. The rear-wheel brake mechanism 40 does not include a friction brake mechanism but includes an electric motor 5 that generates a regenerative braking force on the rear wheel 4. The front-wheel brake mechanism 20 further increases or reduces the friction braking force by the friction brake mechanism 21 regardless of the motion of the operation element 11.

## Description

### Technical Field

The present invention relates to a brake system for a straddle-type vehicle and a straddle-type vehicle including the brake system.

### Background Art

Conventionally, as an example of a brake system for a straddle-type vehicle, a brake system for a two-wheeled motor vehicle in which a rear wheel is driven by an electric motor has been available. Such a brake system includes: a regenerative brake mechanism that uses rotary power of the rear wheel to make the electric motor function as a generator and generate regenerative torque, applies the regenerative torque to the rear wheel, and thereby brakes the rear wheel; and a friction brake mechanism that generates a friction force on a front wheel in response to an operation of a brake lever by a rider and thereby brakes the front wheel (for example, see PTL 1).

### Citation List

### Patent Literature

PTL 1: WO2014-064728

### Summary of Invention

### Technical Problem

In the brake system that is configured as described in PTL 1, the regenerative brake mechanism stores electric power, which is generated by the rotary power of the rear wheel, in a battery. For this reason, when there is no free capacity for storing the electric power in the battery, when a rotational frequency of the rear wheel is reduced, or the like, for example, the electric motor cannot generate the electric power, and thus the regenerative torque cannot be generated. As a result, a braking force that is generated by the friction brake mechanism in response to the operation of the brake lever is possibly insufficient as a braking force for the two-wheeled motor vehicle, and safety of the two-wheeled motor vehicle is possibly impaired.

The invention has been made with the above-described problem as the background and therefore has a purpose of providing a brake system for a straddle-type vehicle capable of improving safety of the straddle-type vehicle during braking. The invention also has a purpose of providing a straddle-type vehicle including such a brake system.

### Solution to Problem

A brake system according to the invention is a brake system for a straddle-type vehicle of a rear-wheel-drive type, and includes: a front-wheel brake mechanism that brakes a front wheel of the straddle-type vehicle; a rear-wheel brake mechanism that brakes a rear wheel of the straddle-type vehicle; and an operation element that is operated by a rider of the straddle-type vehicle. The front-wheel brake mechanism includes a friction brake mechanism that generates a friction braking force only on the front wheel, and can generate the friction braking force in response to motion of the operation element. The rear-wheel brake mechanism does not include a friction brake mechanism but includes a regenerative brake mechanism that generates a regenerative braking force on the rear wheel. The front-wheel brake mechanism can further increase or reduce the friction braking force by the friction brake mechanism regardless of the motion of the operation element.

A straddle-type vehicle according to the invention includes the above-described brake system.

With such a configuration, the front-wheel brake mechanism includes the friction brake mechanism that generates the friction braking force only on the front wheel, and can increase or reduce the friction braking force by the friction brake mechanism regardless of the motion of the operation element. Accordingly, it is possible to improve safety of the straddle-type vehicle by increasing or reducing the friction braking force, which is applied to the front wheel, regardless of the motion of the operation element.

### Brief Description of Drawings

Fig. 1 is a view for explaining a straddle-type vehicle according to a first embodiment.
Fig. 2 is a view for explaining a brake system according to the first embodiment.
Fig. 3 is a view for explaining a hydraulic pressure adjustment unit according to the first embodiment.
Fig. 4 is a diagram for explaining a system configuration of the brake system according to the first embodiment.
Fig. 5 is a view for explaining a brake system according to a second embodiment.
Fig. 6 is a view for explaining an actuator according to the second embodiment.
Fig. 7 is a diagram for explaining a system configuration of the brake system according to the second embodiment.

### Description of Embodiments

A description will hereinafter be made on an embodiment for implementing a brake system and a straddle-type vehicle including the brake system according to the invention with reference to the drawings. In the embodiment, a description will be made on a case where the brake system according to the invention is applied to a two-wheeled motor vehicle as the straddle-type vehicle. However, the brake system according to the invention may be applied to a motorcycle other than the two-wheeled motor vehicle. The motorcycle includes a three-wheeled motor vehicle. Examples of the two-wheeled motor vehicle and the three-wheeled motor vehicle are a motorbike, a scooter, and an electric scooter.

A configuration, operation, and the like, which will be described in the embodiment, merely constitute one example, and each of the brake system and the straddle-type vehicle according to the invention is not limited to a case with such a configuration, such operation, and the like. In the drawings, the same or similar members or portions will be denoted by the same reference sign or will not be denoted by the reference sign. A detailed structure will appropriately be illustrated in a simplified manner or will not be illustrated. The same or similar description may appropriately be simplified or may not be made below.

### <First Embodiment>

A description will be made on the brake system according to the invention and a first embodiment of a straddle-type vehicle including the brake system with reference to the drawings.

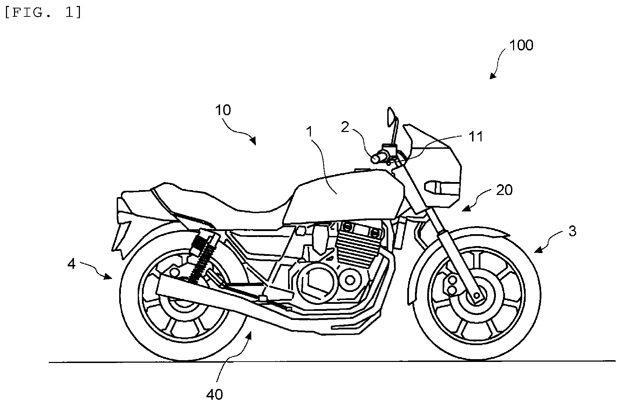

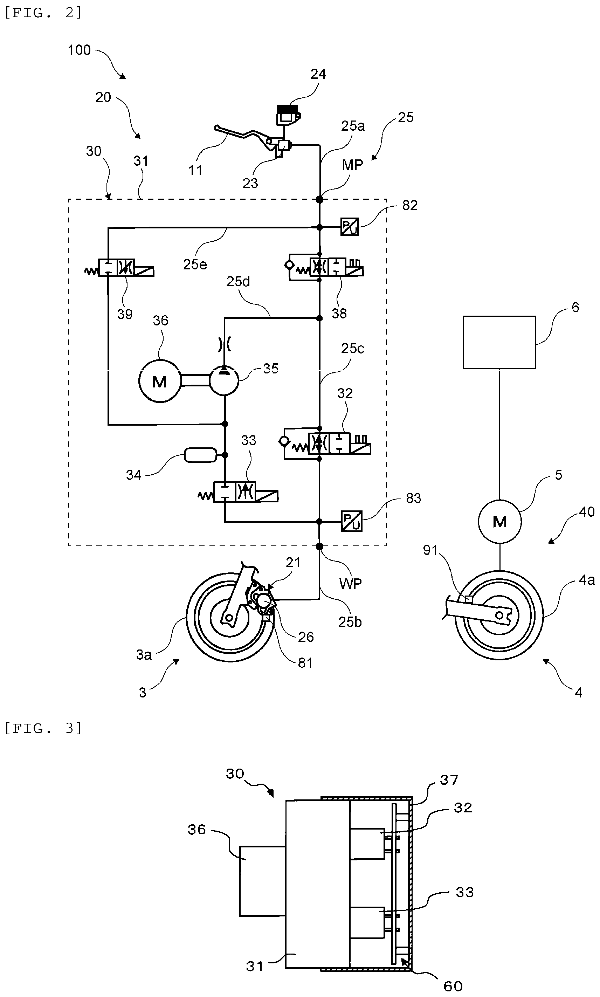

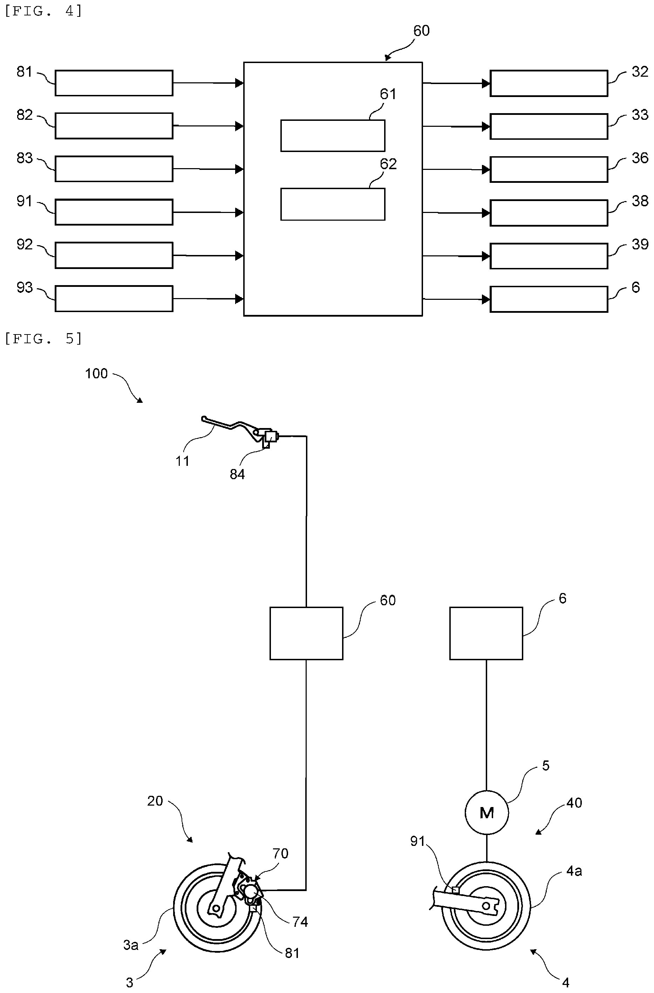

Fig. 1 is a view for explaining the straddle-type vehicle, to which the brake system according to the first embodiment is mounted. Fig. 2 is a view for explaining the brake system according to the first embodiment. Fig. 3 is a view for explaining a hydraulic pressure adjustment unit in the brake system according to the first embodiment. Fig. 4 is a diagram for explaining a system configuration of the brake system according to the first embodiment.

### <Regarding Straddle-Type Vehicle>

As illustrated in Fig. 1, a two-wheeled motor vehicle 10 as the straddle-type vehicle includes: a trunk 1; a handlebar 2 that is held by the trunk 1 in a freely turnable manner; a front wheel 3 that is held with the handlebar 2 by the trunk 1 in a freely turnable manner; a rear wheel 4 that is held by the trunk 1 in a freely rotatable manner; an electric motor 5 (see Fig. 2) that serves as a drive source for driving the rear wheel 4; a power supply unit 6 (see Fig. 2) that supplies electric power to the electric motor 5; and a brake system 100 that brakes the front wheel 3 and the rear wheel 4.

The electric motor 5 is an electrically-powered motor (for example, an AC motor, a brushless DC motor, a synchronous motor, an induction motor, or the like) that is supplied with the electric power from the power supply unit 6 to generate rotary torque, and drives the rear wheel 4 by the rotary torque via a power transmission mechanism (not illustrated) that includes a transmission. The electric motor 5 can also function as a generator, and can generate the electric power by using rotary power of the rear wheel 4. The electric motor may have a configuration (for example, a wheel-in motor or the like) in which a rotational shaft of the electric motor 5 is directly connected to a rotational shaft of the rear wheel 4 so as to drive the rear wheel 4.

The power supply unit 6 includes an electric power storage device (for example, a storage battery, a capacitor, or the like, which will not be illustrated) capable of temporarily storing the received electric power within a specified capacity range, which is set in advance, and capable of supplying the stored electric power to the electric motor 5. The power supply unit 6 controls the electric power that is supplied to the electric motor 5 from the electric power storage device, and thereby controls the rotary torque that acts as an acceleration force to accelerate rotation of the electric motor 5. In this way, the power supply unit 6 can make the electric motor 5 function as the drive source of the two-wheeled motor vehicle 10. In addition, when making the electric motor 5 function as the generator by the rotary power of the rear wheel 4, the power supply unit 6 controls the electric power for charging the electric power storage device that serves as an electric load of the electric motor 5. In this way, by controlling the electric power that is generated by the electric motor 5, the power supply unit 6 can control regenerative torque that is generated in conjunction with the power generation in the electric motor 5 and acts as rotation resistance. The regenerative torque acts as a regenerative braking force that is generated on the rear wheel 4 by the brake system 100, which will be described below.

As it has been described so far, the two-wheeled motor vehicle 10 in this embodiment is the straddle-type vehicle of a rear-wheel-drive type in which the electric motor 5 is actuated when being supplied with the electric power from the power supply unit 6, and drives the rear wheel 4.

Here, the power supply unit 6 may supply the electric power from the power supply unit 6 to the electric motor 5 via an electric power converter (for example, an inverter, a voltage converter, or the like), or may supply the electric power from the power supply unit to the electric motor 5 without interposing the electric power converter. For example, the power supply unit may include a power generator (for example, a fuel cell, a power generator that is driven by an internal combustion engine and generates the electric power, or the like) together with the electric power storage device, and supply the electric power to the electric motor 5 from the electric power storage device and the power generator. Alternatively, the power supply unit may include the internal combustion engine as the drive source of the rear wheel.

### <Regarding Brake System>

As illustrated in Fig. 1 and Fig. 2, the brake system 100 includes: one operation element 11 that is operated by a rider of the two-wheeled motor vehicle 10; a front-wheel brake mechanism 20 that brakes the front wheel 3; a rear-wheel brake mechanism 40 that brakes the rear wheel 4; and a controller 60 that controls braking forces for the front wheel 3 and the rear wheel 4.

The operation element 11 is configured as a brake lever that is provided to the handlebar 2, and is operated by the rider's hand. The operation element 11 is connected to the front-wheel brake mechanism 20 by a fluid pipe that is filled with a brake fluid. The operation element 11 is hydraulically connected to the front-wheel brake mechanism 20.

The front-wheel brake mechanism 20 includes a friction brake mechanism 21 that generates a friction braking force only on the front wheel 3. The friction brake mechanism 21 includes a friction application device 22, a master cylinder 23, a reservoir 24, a fluid path 25, a wheel cylinder 26, and a hydraulic pressure adjustment unit 30, which will be described below.

The friction brake mechanism 21 presses a friction material (not illustrated) of the friction application device 22, which is held by the trunk 1, against a disc rotor 3a, which rotates with the front wheel 3, and thereby generates or increases the friction braking force for braking the front wheel 3 by a friction force that corresponds to an operation amount of the operation element 11. The friction application device 22 has the wheel cylinder 26, which is hydraulically connected to the operation element 11, therein. When a hydraulic pressure of the brake fluid in the wheel cylinder 26 is increased, the friction application device 22 presses the friction material against the disc rotor 3a according to an increase in the hydraulic pressure. Meanwhile, when the hydraulic pressure of the brake fluid in the wheel cylinder 26 is reduced, the friction application device 22 separates the friction material from the disc rotor 3a according to a reduction in the hydraulic pressure. In this way, the friction application device 22 generates, increases, or reduces the friction force, which corresponds to the operation amount of the operation element 11, to brake the front wheel 3. The friction application device 22 may have another structure. For example, the friction application device 22 may press a friction material of a brake shoe, which is held by the trunk 1, against a brake drum, which rotates with the front wheel 3, and thereby generates the friction force corresponding to the operation amount of the operation element 11.

The friction application device 22 includes: the master cylinder 23 to which motion of the operation element 11 is transmitted; the reservoir 24 that is attached to the master cylinder 23; the wheel cylinder 26 that communicates with the master cylinder 23 via the fluid path 25 filled with the brake fluid and is installed in the friction application device 22; a brake fluid pipe 24a that constitutes a part of the fluid path 25 and one end of which is connected to the master cylinder 23; a brake fluid pipe 24b that constitutes a part of the fluid path 25 and one end of which is connected to the wheel cylinder 26; and the hydraulic pressure adjustment unit 30 that is connected to the other end of the brake fluid pipe 24a and the other end of the brake fluid pipe 24b. The hydraulic pressure adjustment unit 30 may directly be connected to the master cylinder 23 without using the brake fluid pipe 24a. Alternatively, the hydraulic pressure adjustment unit 30 may directly be connected to the wheel cylinder 26 without using the brake fluid pipe 24b. In addition, the hydraulic pressure adjustment unit 30 may be unitized with the master cylinder 23 or the wheel cylinder 26.

As illustrated in Fig. 2 and Fig. 3, the hydraulic pressure adjustment unit 30 includes a base body 31. The base body 31 is formed with: a master cylinder port MP to which the brake fluid pipe 24a is connected; a wheel cylinder port WP to which the brake fluid pipe 24b is connected; a primary fluid path 25c as an internal fluid path that constitutes a part of the fluid path 25 and connects the master cylinder port MP and the wheel cylinder port WP; and a secondary fluid path 25d as an internal fluid path that constitutes a part of the fluid path 25 and bypasses the primary fluid path 25c.

An inlet valve 32 is provided to an intermediate portion of the primary fluid path 25c. The secondary fluid path 25d is sequentially provided with an outlet valve 33, an accumulator 34 for storing the brake fluid, and a pump 35 from an upstream side. An upstream end of the secondary fluid path 25d is connected to a portion of the primary fluid path 25c on a wheel cylinder port WP side from the inlet valve 32. A downstream end of the secondary fluid path 25d is connected to a portion of the primary fluid path 25c on a master cylinder port MP side from the inlet valve 32.

The pump 35 is driven by a motor 36. The inlet valve 32, the outlet valve 33, the accumulator 34, the pump 35, and the motor 36 are assembled to the base body 31. A housing 37 for accommodating at least a part of the controller (ECU) 60 is attached to the base body 31.

The inlet valve 32 is an electromagnetic valve that is switched from being opened to being closed and thereby blocks a flow of the brake fluid at an installation position thereof when being brought from an unenergized state into an energized state by the controller 60, for example. The outlet valve 33 is an electromagnetic valve that is switched from being closed to being opened and thereby allows the flow of the brake fluid toward the pump 35 via an installation position thereof when being brought from the unenergized state into the energized state by the controller 60, for example.

In the hydraulic pressure adjustment unit 30, when the inlet valve 32 and the outlet valve 33 are controlled in the energized state, the inlet valve 32 is brought into the closed state and blocks the fluid path, through which the hydraulic pressure of the brake fluid is supplied from the master cylinder 23 to the wheel cylinder 26, and, meanwhile, the outlet valve 33 is brought into the open state to form the fluid path, through which the hydraulic pressure of the brake fluid moves from the wheel cylinder 26 into the accumulator 34 in the secondary fluid path 25d. In this way, the hydraulic pressure of the brake fluid in the wheel cylinder 26 is released to the accumulator 34, and the hydraulic pressure of the brake fluid in the wheel cylinder 26 is reduced.

In the hydraulic pressure adjustment unit 30, when the pump 35 is driven in a state where a switching valve 38, which will be described below, is controlled in an unenergized state, the hydraulic pressure of the brake fluid in the accumulator 34 can move and return to the master cylinder 23 and the reservoir 24.

The base body 31 is formed with a booster fluid path 25e. The booster fluid path 25e is an internal flow path that connects between the master cylinder port MP side of the primary fluid path 25c from a merging portion between the primary fluid path 25c and the downstream end of the secondary fluid path 25d and a portion of the secondary fluid path 25d between the accumulator 34 and the pump 35. The switching valve 38 is provided between a merging portion of the primary fluid path 25c with the booster fluid path 25e and a merging portion of the primary fluid path 25c with the downstream end of the secondary fluid path 25d. A booster regulator 39 is provided to an intermediate portion of the booster fluid path 25e.

The switching valve 38 is an electromagnetic valve that is switched from being opened to being closed to block the flow of the brake fluid at an installation position thereof when being brought into the energized state from the unenergized state by the controller 60, for example. The booster regulator 39 is an electromagnetic valve that is switched from being closed to being opened to allow the flow of the brake fluid toward the pump 35 via an installation position thereof when being brought into the energized state from the unenergized state by the controller 60, for example.

In the hydraulic pressure adjustment unit 30, when the inlet valve 32 and the outlet valve 33 are controlled in the unenergized state, and the switching valve 38 and the booster regulator 39 are controlled in the energized state, the outlet valve 33 and the switching valve 38 are brought into the closed state. In this way, a fluid path, through which the hydraulic pressure of the brake fluid returns from the master cylinder 23 to the wheel cylinder 26 via these outlet valve 33 and switching valve 38, is blocked. Meanwhile, the inlet valve 32 and the booster regulator 39 are brought into the open state. Thus, a fluid path, through which the hydraulic pressure of the brake fluid moves from the reservoir 24 to the wheel cylinder 26 via these inlet valve 32, booster regulator 39, pump 35, is formed. Then, the pump 35 is controlled in a driven state. Accordingly, the hydraulic pressure of the brake fluid moves from the reservoir 24 to the wheel cylinder 26, and the hydraulic pressure in the wheel cylinder 26 is increased. In the hydraulic pressure adjustment unit 30, when the hydraulic pressure in the wheel cylinder 26 is increased by the pump 35, it is possible to increase the hydraulic pressure in the wheel cylinder 26 to be higher than the hydraulic pressure that corresponds to displacement of the operation element 11 by the rider's operation.

In the hydraulic pressure adjustment unit 30, a first brake hydraulic pressure sensor 82, which detects the hydraulic pressure of the brake fluid in the master cylinder 23, is provided to an area on a master cylinder 23 side from the switching valve 38 in the primary fluid path 25c, and a second brake hydraulic pressure sensor 83, which detects the hydraulic pressure of the brake fluid in the wheel cylinder 26, is provided to an area on a wheel cylinder 26 side from the inlet valve 32 in the primary fluid path 25c.

The friction application device 22, the master cylinder 23, the reservoir 24, the fluid path 25, the wheel cylinder 26, and the hydraulic pressure adjustment unit 30 correspond to a friction brake mechanism that generates the friction braking force only on the front wheel in the invention.

The rear-wheel brake mechanism 40 applies the regenerative torque to the rear wheel 4. The regenerative torque is generated when the electric motor 5 is actuated as the generator by using the rotary power of the rear wheel 4. The rear-wheel brake mechanism 40 then generates the regenerative braking force for braking the rear wheel 4 by using the regenerative torque. In the electric motor 5, when the rotational shaft of the electric motor 5 rotates by the rotary power of the rear wheel 4, an induced electromotive force is generated, and the regenerative torque, which corresponds to a current toward the electric power storage device, is then generated in an opposite direction from a rotational direction of the rear wheel 4 by the induced electromotive force, and acts to decelerate the rotation of the rear wheel 4. The electric motor 5 functions as a part of the brake system 100 by using this action. Thus, the rear wheel 4 can be braked without providing the friction brake mechanism that generates the friction braking force. The electric motor 5 that functions as the generator corresponds to a regenerative brake mechanism that generates the regenerative braking force on the rear wheel in the invention.

As illustrated in Fig. 4, the controller 60 includes: a first control section 61 that controls operation of the inlet valve 32, the outlet valve 33, the switching valve 38, the booster regulator 39, and the motor 36 provided to the front-wheel brake mechanism 20; and a second control section 62 that controls operation of the electric motor 5 as the generator provided to the rear-wheel brake mechanism 40. The first control section 61 and the second control section 62 may be provided as one unit or may be divided into multiple units. Each of the first control section 61 and the second control section 62 may partially or entirely be a microcomputer, a microprocessor unit, or the like, may be one whose firmware and the like can be updated, or may be a program module or the like that is executed by a command from a CPU or the like, for example.

The controller 60 receives output signals from a front wheel rotational frequency sensor 81, the first brake hydraulic pressure sensor 82, the second brake hydraulic pressure sensor 83, a rear wheel rotational frequency sensor 91, a stored electric power residual amount sensor 92, a surrounding environment sensor 93, and the like in a wired or wireless manner, for example. The controller 60 may also receive output signals from other sensors. The controller 60 derives a target braking force to be generated on each of the front wheel 3 and the rear wheel 4 on the basis of the output signals from those sensors. The first control section 61 outputs a command signal, which corresponds to the target braking force to be generated on the front wheel 3, to the inlet valve 32, the outlet valve 33, and a driver in the motor 36 in the wired or wireless manner. The second control section 62 outputs a command signal, which corresponds to the target braking force to be generated on the rear wheel 4, to the controller, which controls the electric power for charging the electric power storage device, in the wired or wireless manner.

The front wheel rotational frequency sensor 81 detects a rotational frequency of the front wheel 3. The front wheel rotational frequency sensor 81 is held by the trunk 1, for example. The front wheel rotational frequency sensor 81 may detect another physical quantity that can substantially be converted to the rotational frequency of the front wheel 3.

The first brake hydraulic pressure sensor 82 detects the hydraulic pressure of the brake fluid in the master cylinder 23. The first brake hydraulic pressure sensor 82 is provided to the area on the master cylinder 23 side from the switching valve 38 in the primary fluid path 25c (see Fig. 2). The first brake hydraulic pressure sensor 82 may detect another physical quantity (for example, the operation amount of the operation element 11, the displacement of the operation element 11, displacement of a piston in the master cylinder 23, or the like) that can substantially be converted to the hydraulic pressure of the brake fluid in the master cylinder 23.

The second brake hydraulic pressure sensor 83 detects the hydraulic pressure of the brake fluid in the wheel cylinder 26. The second brake hydraulic pressure sensor 83 is provided to the area on the wheel cylinder 26 side from the inlet valve 32 in the primary fluid path 25c (see Fig. 2). The second brake hydraulic pressure sensor 83 may detect another physical quantity (for example, displacement of the friction material in the friction application device 22, or the like) that can substantially be converted to the hydraulic pressure of the brake fluid in the wheel cylinder 26.

The rear wheel rotational frequency sensor 91 detects a rotational frequency of the rear wheel 4. The rear wheel rotational frequency sensor 91 is held by the trunk 1, for example. The rear wheel rotational frequency sensor 91 may detect another physical quantity that can substantially be converted to the rotational frequency of the rear wheel 4.

The stored electric power residual amount sensor 92 detects a residual electric power amount that is stored in the electric power storage device provided to the power supply unit 6. The stored electric power residual amount sensor 92 may be any sensor as long as the stored electric power residual amount sensor 92 detects a physical quantity (for example, a voltage value of the storage battery provided to the electric power storage device, a current value input/output to/from the electric power storage device, or the like), to which the electric power amount stored in the electric power storage device or a free capacity for storing the electric power in the electric power storage device is reflected.

The surrounding environment sensor 93 detects environment around the two-wheeled motor vehicle 10 (for example, a road surface condition in an advancing direction of the two-wheeled motor vehicle 10, another vehicle, and the like). The surrounding environment sensor 93 may be any device (for example, a camera, an ultrasonic sensor, a radar device, an external communication device, or the like) as long as the surrounding environment sensor 93 detects information, to which the environment around the two-wheeled motor vehicle 10 is reflected.

In this embodiment, the hydraulic pressure adjustment unit 30 includes: the first brake hydraulic pressure sensor 82 that detects the hydraulic pressure of the brake fluid in the master cylinder 23; and the second brake hydraulic pressure sensor 83 that detects the hydraulic pressure of the brake fluid in the wheel cylinder 26. However, the hydraulic pressure adjustment unit 30 may only include one of the first brake hydraulic pressure sensor 82 and the second brake hydraulic pressure sensor 83. For example, the hydraulic pressure adjustment unit 30 may only include the first brake hydraulic pressure sensor 82 and estimate the hydraulic pressure of the brake fluid in the wheel cylinder 26 on the basis of the hydraulic pressure detected by the first brake hydraulic pressure sensor 82 or another physical quantity that can substantially be converted to the hydraulic pressure of the brake fluid in the master cylinder 23. Alternatively, the hydraulic pressure adjustment unit 30 may only include the second brake hydraulic pressure sensor 83 and estimate the hydraulic pressure of the brake fluid in the master cylinder 23 on the basis of the hydraulic pressure detected by the second brake hydraulic pressure sensor 83 or another physical quantity that can substantially be converted to the hydraulic pressure of the brake fluid in the wheel cylinder 26. Further alternatively, the hydraulic pressure adjustment unit 30 may include none of the first brake hydraulic pressure sensor 82 and the second brake hydraulic pressure sensor 83, may estimate the hydraulic pressure of the brake fluid in the wheel cylinder 26 on the basis of another physical quantity that can substantially be converted to the hydraulic pressure of the brake fluid in the master cylinder 23, and may estimate the hydraulic pressure of the brake fluid in the master cylinder 23 on the basis of another physical quantity that can substantially be converted to the hydraulic pressure of the brake fluid in the wheel cylinder 26.

The first control section 61 and the second control section 62 are accommodated in the housing 37 of the hydraulic pressure adjustment unit 30, and are unitized with a hydraulic pressure adjustment mechanism (for example, the inlet valve 32, the outlet valve 33, the motor 36, the switching valve 38, the booster regulator 39, and the like). With such a configuration, a sealing structure can be shared by the first control section 61 and the second control section 62, and thus cost for the brake system 100 can be cut.

The second control section 62 may be unitized with the electric motor 5 and the power supply unit 6. With such a configuration, the front-wheel brake mechanism 20 and the rear-wheel brake mechanism 40 can separately be managed. As a result, it is possible to improve maintainability, a retrofit property, and the like of the brake system 100.

When the rider operates the operation element 11 in a state where the two-wheeled motor vehicle 10 is stopped or the two-wheeled motor vehicle 10 travels while a slippage exceeding a reference value does not occur to the front wheel 3 or the rear wheel 4, that is, during service braking, the first control section 61 controls the inlet valve 32, the outlet valve 33, the switching valve 38, and the booster regulator 39 in the unenergized state, and controls the motor 36 in an undriven state. When the rider operates the operation element 11 in this state, a piston (not illustrated) in the master cylinder 23 is pressed in response to the motion of the operation element 11, so as to increase the hydraulic pressure of the brake fluid in the wheel cylinder 26, and the friction material (not illustrated) of the friction application device 22 is pressed against the disc rotor 3a. As a result, the friction braking force that is applied to the front wheel 3 is generated or increased. When the rider releases the operation element 11, the piston (not illustrated) in the master cylinder 23 returns in response to the motion of the operation element 11, so as to reduce the hydraulic pressure of the brake fluid in the wheel cylinder 26, and the friction material (not illustrated) of the friction application device 22 moves away from the disc rotor 3a. As a result, the friction braking force that is applied to the front wheel 3 is reduced or eliminated. That is, during the service braking, in the front-wheel brake mechanism 20, the friction braking force, which is applied to the front wheel 3 by the friction application device 22, varies according to a change in the hydraulic pressure of the brake fluid in the master cylinder 23 corresponding to the motion of the operation element 11.

When the rider operates the operation element 11, the controller 60 executes interlocking brake control, in which control for applying the regenerative braking force to the rear wheel 4 by the rear-wheel brake mechanism 40 is executed and control for applying the friction braking force to the front wheel 3 by the front-wheel brake mechanism 20 is executed.

In the interlocking brake control, the controller 60 acquires, for example: the braking force that is requested by the rider on the basis of the operation amount of the operation element 11 (hereinafter may also be referred to as a requested braking force); travel information (for example, a speed, a tilt of a vehicle body, and the like) on a travel state of the two-wheeled motor vehicle 10; and capacity information on available capacity for storing the electric power in the electric power storage device of the power supply unit 6. Then, the controller 60 acquires the regenerative braking force, which can be generated by the electric motor 5 as the regenerative brake mechanism, on the basis of the travel information and the capacity information, and compares the regenerative braking force with the requested braking force. When it is determined that the requested braking force exceeds the regenerative braking force, the controller 60 executes control for generating the braking force, which is equal to an amount of the requested braking force exceeding the regenerative braking force, as the friction braking force by the friction brake mechanism 21, and executes control for generating the regenerative braking force by the electric motor 5.

In addition, in the interlocking brake control, the controller 60 acquires each of the target braking force of the front-wheel brake mechanism 20 and the target braking force of the rear-wheel brake mechanism 40 at the time when the requested braking force is divided at a specified ratio (for example, a ratio between the braking force on the front wheel 3 and the braking force on the rear wheel 4 that does not hinder travel stability of the two-wheeled motor vehicle 10, or the like) on the basis of the travel state of the two-wheeled motor vehicle 10, for example.

Then, the first control section 61 acquires information on the regenerative braking force that can be generated on the basis of a power storage status in the power supply unit 6, and compares the target braking force of the rear-wheel brake mechanism 40 with the regenerative braking force that can be generated by the rear-wheel brake mechanism 40. In the case where the target braking force of the rear-wheel brake mechanism 40 falls within a range of the regenerative braking force that can be generated by the rear-wheel brake mechanism 40, the first control section 61 executes friction braking force control for generating the target braking force of the front-wheel brake mechanism 20 as the friction braking force of the friction brake mechanism. Meanwhile, in the case where the target braking force of the rear-wheel brake mechanism 40 exceeds the range of the regenerative braking force that can be generated by the rear-wheel brake mechanism 40, the first control section 61 executes the friction braking force control for generating, as the friction braking force of the friction brake mechanism, the target braking force of the front-wheel brake mechanism 20 and the braking force (hereinafter may also be referred to as a deficient braking force) as a difference between the target braking force of the rear-wheel brake mechanism 40 and the regenerative braking force that can be generated by the rear-wheel brake mechanism 40.

More specifically, in the friction braking force control, for example, the inlet valve 32, the outlet valve 33, and the switching valve 38 are controlled in the energized state, the booster regulator 39 is controlled in the unenergized state, and the motor 36 is controlled in the driven state. By such control, the hydraulic pressure of the brake fluid in the wheel cylinder 26, which is supplied from the master cylinder 23 by the motion of the operation element 11, is released within a specified range, and is reduced to a specified value in the master cylinder 23. In this way, the target braking force of the front-wheel brake mechanism 20 and the above-described deficient braking force are generated as the friction braking force of the friction application device 22. That is, in the front-wheel brake mechanism 20, during execution of the interlocking brake control, the friction braking force that is applied to the front wheel 3 by the friction application device 22 is generated in response to the motion of the operation element 11.

Meanwhile, the second control section 62 controls the electric power for charging the electric power storage device within a range where the electric power can be generated on the basis of a travel status (for example, the speed, the tilt, and the like) of the two-wheeled motor vehicle 10 and the electric power storage status and within a range up to the target braking force of the rear-wheel brake mechanism 40, and generates the regenerative braking force by the regenerative brake mechanism.

In the friction braking control, in a state where the friction braking force applied to the front wheel 3 has to be increased, for example, in a state where the regenerative braking force, which can be generated by the rear-wheel brake mechanism 40, is reduced during execution of the friction braking control, or the like, the first control section 61 controls the inlet valve 32 and the outlet valve 33 in the unenergized state, controls the switching valve 38 and the booster regulator 39 in the energized state, and drives the motor 36 with a drive amount that corresponds to the output signal from the second brake hydraulic pressure sensor 83. By increasing the hydraulic pressure of the brake fluid in the wheel cylinder 26 in such control, control is executed to increase the friction braking force by the friction application device 22 and thereby compensate for a reduction in the regenerative braking force. That is, in the front-wheel brake mechanism 20, during the execution of the interlocking brake control, the friction braking force that is applied to the front wheel 3 by the friction application device 22 is increased regardless of the motion of the operation element 11.

In the friction braking control, in the state where the friction braking force applied to the front wheel 3 has to be reduced, for example, in a state where the regenerative braking force, which is generated by the rear-wheel brake mechanism 40, is increased during the execution of the friction braking control, or the like, the first control section 61 controls the inlet valve 32 and the outlet valve 33 in the energized state, and drives the motor 36 with the drive amount that corresponds to the output signals from the first brake hydraulic pressure sensor 82 and the second brake hydraulic pressure sensor 83. By reducing the hydraulic pressure of the brake fluid in the wheel cylinder 26 in such control, the friction braking force generated by the friction application device 22 is reduced. That is, in the front-wheel brake mechanism 20, during the execution of the interlocking brake control, the friction braking force that is applied to the front wheel 3 by the friction application device 22 is reduced regardless of the motion of the operation element 11.

By these types of the control, a total braking force generated by the brake system 100, that is, a sum of the friction braking force generated by the front-wheel brake mechanism 20 and the regenerative braking force generated by the rear-wheel brake mechanism 40 is controlled to be the requested braking force by the rider.

During the execution of the interlocking brake control, the controller 60 may execute lock control operation, slippage control operation, stop assistance control operation, and emergency braking control operation, which will be described below.

In the case where the two-wheeled motor vehicle 10 travels in a state where the front wheel 3 and the rear wheel 4 is locked or possibly locked, the controller 60 executes the lock control operation to suppress locking. The lock control operation includes operation to execute anti-lock brake control for each of the wheels. When executing the lock control operation, the controller 60 may control, in addition to the brake system 100, another system that is mounted to the two-wheeled motor vehicle 10. The controller 60 executes the lock control operation regardless of the motion of the operation element 11.

Locking or possible locking of the front wheel 3 and the rear wheel 4 of the two-wheeled motor vehicle 10 can be determined by a well-known method using the output signals from the front wheel rotational frequency sensor 81 and the rear wheel rotational frequency sensor 91.

During execution of the lock control operation, in the state where the friction braking force applied to the front wheel 3 has to be reduced, the first control section 61 controls the inlet valve 32 and the outlet valve 33 in the energized state, and drives the motor 36 with the drive amount that corresponds to the output signals from the first brake hydraulic pressure sensor 82 and the second brake hydraulic pressure sensor 83. By such control, the hydraulic pressure of the brake fluid in the wheel cylinder 26 is reduced, and the friction material (not illustrated) of the friction application device 22 moves away from the disc rotor 3a. That is, during the execution of the lock control operation, in the front-wheel brake mechanism 20, the friction braking force that is applied to the front wheel 3 by the friction application device 22 varies by the control of the inlet valve 32, the outlet valve 33, and the motor 36 by the controller 60 regardless of the motion of the operation element 11. Here, instead of the output signals from the first brake hydraulic pressure sensor 82 and the second brake hydraulic pressure sensor 83, the command signals that the first control section 61 has transmitted to the inlet valve 32, the outlet valve 33, and the driver in the motor 36 immediately before the transmission of the output signals may be used.

During the execution of the lock control operation, in a state where the regenerative braking force applied to the rear wheel 4 has to be reduced, the second control section 62 reduces the electric power for charging the electric power storage device of the power supply unit 6. By such control, the electrical load on the electric motor 5, which functions as the generator, is reduced, so as to reduce the regenerative braking force generated by the electric motor 5. That is, during the execution of the lock control operation, in the rear-wheel brake mechanism 40, the regenerative braking force that is applied to the rear wheel 4 by the electric motor 5 varies by the control of the electric power for charging the electric power storage device regardless of the motion of the operation element 11.

During the execution of the lock control operation, when the rear wheel 4 is locked or possibly locked by the regenerative braking force that is applied to the rear wheel 4, the first control section 61 controls the inlet valve 32 and the outlet valve 33 in the unenergized state, controls the switching valve 38 and the booster regulator 39 in the energized state, and drives the motor 36 with the drive amount that corresponds to the output signal from the second brake hydraulic pressure sensor 83. By such control, the hydraulic pressure of the brake fluid in the wheel cylinder 26 is increased, and the friction material (not illustrated) of the friction application device 22 is pressed against the disc rotor 3a. That is, during the execution of the lock control operation, in the front-wheel brake mechanism 20, the friction braking force that is applied to the front wheel 3 by the friction application device 22 is generated or increased by the control of the inlet valve 32, the outlet valve 33, the switching valve 38, the booster regulator 39, and the motor 36 by the controller 60 regardless of the motion of the operation element 11. In this way, in the case where the regenerative braking force is reduced due to locking of the rear wheel 4, the reduction in the regenerative braking force can be compensated by the increase in the friction braking force on the front wheel.

In the case where the two-wheeled motor vehicle 10 travels in a state where the slippage that exceeds the reference value occurs or possibly occurs to the front wheel 3 and the rear wheel 4, the controller 60 executes the slippage control operation to suppress the slippage. Examples of the slippage control operation are operation to execute the anti-lock brake control for each of the wheels, operation to execute wheel slip suppression control for each of the wheels, and operation to execute sideslip suppression control for each of the wheels. When executing the slippage control operation, the controller 60 may control, in addition to the brake system 100, another system that is mounted to the two-wheeled motor vehicle 10. The controller 60 executes the slippage control operation regardless of the motion of the operation element 11.

The slippage or the possible slippage that occurs to the front wheel 3 and the rear wheel 4 of the two-wheeled motor vehicle 10 can be determined by a well-known method using the output signals from the front wheel rotational frequency sensor 81 and the rear wheel rotational frequency sensor 91.

During the execution of the slippage control operation, in the state where the friction braking force applied to the front wheel 3 has to be reduced, the first control section 61 controls the inlet valve 32 and the outlet valve 33 in the energized state, and drives the motor 36 with the drive amount that corresponds to the output signals from the first brake hydraulic pressure sensor 82 and the second brake hydraulic pressure sensor 83. By such control, the hydraulic pressure of the brake fluid in the wheel cylinder 26 is reduced, and the friction material (not illustrated) of the friction application device 22 moves away from the disc rotor 3a. That is, during execution of the slippage control operation, in the front-wheel brake mechanism 20, the friction braking force that is applied to the front wheel 3 by the friction application device 22 varies by the control of the inlet valve 32, the outlet valve 33, and the motor 36 by the controller 60 regardless of the motion of the operation element 11. Here, instead of the output signals from the first brake hydraulic pressure sensor 82 and the second brake hydraulic pressure sensor 83, the command signals that the first control section 61 has transmitted to the inlet valve 32, the outlet valve 33, and the driver in the motor 36 immediately before the transmission of the output signals may be used.

During the execution of the slippage control operation, in the state where the regenerative braking force applied to the rear wheel 4 has to be reduced, the second control section 62 reduces the electric power for charging the electric power storage device of the power supply unit 6. By such control, the electrical load on the electric motor 5, which functions as the generator, is reduced, so as to reduce the regenerative braking force generated by the electric motor 5. That is, during the execution of the slippage control operation, in the rear-wheel brake mechanism 40, the regenerative braking force that is applied to the rear wheel 4 by the electric motor 5 varies by the control of the electric power for charging the electric power storage device regardless of the motion of the operation element 11.

During the execution of the slippage control operation, in the state where the friction braking force applied to the front wheel 3 has to be generated or increased (for example, in a state where the rear wheel 4 slips or possibly slips by the regenerative braking force during turning travel of the two-wheeled motor vehicle 10, or the like), the first control section 61 controls the inlet valve 32 and the outlet valve 33 in the unenergized state, controls the switching valve 38 and the booster regulator 39 in the energized state, and drives the motor 36 with the drive amount that corresponds to the output signal from the second brake hydraulic pressure sensor 83. By such control, the hydraulic pressure of the brake fluid in the wheel cylinder 26 is increased, and the friction material (not illustrated) of the friction application device 22 is pressed against the disc rotor 3a. That is, during the execution of the slippage control operation, in the front-wheel brake mechanism 20, the friction braking force that is applied to the front wheel 3 by the friction application device 22 is generated or increased by the control of the inlet valve 32, the outlet valve 33, the switching valve 38, the booster regulator 39, and the motor 36 by the controller 60 regardless of the motion of the operation element 11. In this way, in the case where the regenerative braking force is reduced due to the slippage of the rear wheel 4, the reduction in the regenerative braking force can be compensated by the increase in the friction braking force on the front wheel. Here, instead of the output signal from the second brake hydraulic pressure sensor 83, the command signals that the first control section 61 has transmitted to the inlet valve 32, the outlet valve 33, the switching valve 38, the booster regulator 39, and the driver in the motor 36 immediately before the transmission of the output signal may be used.

During the execution of the lock control operation or during the execution of the slippage control operation, in the state where the regenerative braking force applied to the rear wheel 4 has to be reduced, the second control section 62 increases the electric power for charging the electric power storage device of the power supply unit 6. By such control, the electrical load on the electric motor 5, which functions as the generator, is increased, so as to increase the regenerative braking force generated by the electric motor 5. That is, during the execution of the slippage control operation, in the rear-wheel brake mechanism 40, the regenerative braking force that is applied to the rear wheel 4 by the electric motor 5 varies by the control of the electric power for charging the electric power storage device regardless of the motion of the operation element 11.

In the case where the two-wheeled motor vehicle 10 comes to a stop, or in the case where the rider operates the operation element 11 in a stopped state of the two-wheeled motor vehicle 10, the controller 60 executes the stop assistance control operation to generate the braking force at least on the front wheel 3 and assist with transition to or maintenance of the stopped state of the two-wheeled motor vehicle 10. When executing the stop assistance control operation, the controller 60 may control, in addition to the brake system 100, another system that is mounted to the two-wheeled motor vehicle 10. The stop assistance control operation is canceled, for example, when the rider's hand is released from the operation element 11 and it is determined that the operation has been terminated.

During the execution of the stop assistance control operation, in the case where the friction force applied to the front wheel 3 has to be increased (for example, in the case where the braking force that is based on the operation amount of the operation element 11 falls below the braking force with which the stopped state of the two-wheeled motor vehicle 10 is maintained, or the like), the first control section 61 controls the inlet valve 32 and the outlet valve 33 in the unenergized state, controls the switching valve 38 and the booster regulator 39 in the energized state, and drives the motor 36 with the drive amount that corresponds to the output signal from the second brake hydraulic pressure sensor 83. By such control, the hydraulic pressure of the brake fluid in the wheel cylinder 26 is increased, and the friction material (not illustrated) of the friction application device 22 is pressed against the disc rotor 3a. That is, during the execution of the stop assistance control operation, in the front-wheel brake mechanism 20, the friction braking force that is applied to the front wheel 3 by the friction application device 22 varies by the control of the inlet valve 32, the outlet valve 33, the switching valve 38, the booster regulator 39, and the motor 36 by the controller 60 regardless of the motion of the operation element 11. Here, instead of the output signal from the second brake hydraulic pressure sensor 83, the command signals that the first control section 61 has transmitted to the inlet valve 32, the outlet valve 33, the switching valve 38, the booster regulator 39, and the driver in the motor 36 immediately before the transmission of the output signal may be used. For example, during the execution of the stop assistance control operation, the regenerative braking force applied to the rear wheel 4 may be increased.

In the case where the two-wheeled motor vehicle 10 has to be decelerated or stopped urgently on the basis of information on a state of the environment around the two-wheeled motor vehicle 10, which is detected by the surrounding environment sensor 93, the controller 60 executes the emergency braking control operation to generate the friction braking force at least on the front wheel 3. When executing the emergency braking control operation, the controller 60 may control, in addition to the brake system 100, another system that is mounted to the two-wheeled motor vehicle 10. Alternatively, the controller 60 may execute the above-described interlocking brake control, and execute the control for dividing the braking force for urgently decelerating or stopping the two-wheeled motor vehicle 10 into the target braking force of the front-wheel brake mechanism 20 and the target braking force of the rear-wheel brake mechanism 40, so as to generate the braking force.

During the execution of the emergency braking control operation, in the state where the friction braking force applied to the front wheel 3 has to be increased, the first control section 61 controls the inlet valve 32 and the outlet valve 33 in the unenergized state, controls the switching valve 38 and the booster regulator 39 in the energized state, and drives the motor 36 with the drive amount that corresponds to the output signal from the second brake hydraulic pressure sensor 83. By such control, the hydraulic pressure of the brake fluid in the wheel cylinder 26 is increased, and the friction material (not illustrated) of the friction application device 22 is pressed against the disc rotor 3a. That is, during the execution of the emergency braking control operation, in the front-wheel brake mechanism 20, the friction braking force that is applied to the front wheel 3 by the friction application device 22 varies by the control of the inlet valve 32, the outlet valve 33, the switching valve 38, the booster regulator 39, and the motor 36 by the controller 60 regardless of the motion of the operation element 11. Here, instead of the output signal from the second brake hydraulic pressure sensor 83, the command signals that the first control section 61 has transmitted to the inlet valve 32, the outlet valve 33, the switching valve 38, the booster regulator 39, and the driver in the motor 36 immediately before the transmission of the output signal may be used.

In addition, during the execution of the emergency braking control operation, in the state where the regenerative braking force applied to the rear wheel 4 has to be increased, the second control section 62 increases the electric power for charging the electric power storage device of the power supply unit 6. By such control, the electrical load on the electric motor 5, which functions as the generator, is increased, so as to increase the regenerative braking force generated by the electric motor 5." That is, during the execution of the slippage control operation, in the rear-wheel brake mechanism 40, the regenerative braking force that is applied to the rear wheel 4 by the electric motor 5 varies by the control of the electric power for charging the electric power storage device of the power supply unit 6 by the controller 60 regardless of the motion of the operation element 11.

As it has been described so far, the brake system 100 in this embodiment is the brake system for the two-wheeled motor vehicle 10 as the straddle-type vehicle of the rear-wheel-drive type, and includes: the front-wheel brake mechanism 20 that brakes the front wheel 3 of the two-wheeled motor vehicle 10; the rear-wheel brake mechanism 40 that brakes the rear wheel 4 of the two-wheeled motor vehicle 10; and the operation element 11 that is operated by the rider of the two-wheeled motor vehicle 10. The front-wheel brake mechanism 20 includes the friction brake mechanism 21 (including the friction application device 22, the master cylinder 23, the reservoir 24, the fluid path 25, the wheel cylinder 26, the hydraulic pressure adjustment unit 30, the controller 60, and the like) that generates the friction braking force only on the front wheel 3, and can generate the friction braking force in response to the motion of the operation element 11 during the service braking, for example. The rear-wheel brake mechanism 40 does not include the friction brake mechanism that generates the friction braking force, but includes, as the regenerative brake mechanism for generating the regenerative braking force on the rear wheel 4, the electric motor 5 that functions as the generator and generates the regenerative torque applied as the regenerative braking force. Furthermore, in the interlocking brake control, the lock control operation, the slippage control operation, the stop assistance control operation, the emergency braking control operation, and the like executed by the controller 60, for example, the front-wheel brake mechanism 20 can increase or reduce the friction braking force generated by the friction brake mechanism 21 (including the friction application device 22, the master cylinder 23, the reservoir 24, the fluid path 25, the wheel cylinder 26, the hydraulic pressure adjustment unit 30, and the like) regardless of the motion of the operation element 11.

The brake system 100 in this embodiment includes the one operation element 11 that is common to the front-wheel brake mechanism and the rear-wheel brake mechanism. The controller 60 executes the interlocking brake control to divide the rider's requested braking force, which is acquired on the basis of the operation amount of the operation element 11, into the target braking force of the front-wheel brake mechanism 20 and the target braking force of the rear-wheel brake mechanism 40, and generates the braking forces by the front-wheel brake mechanism and the rear-wheel brake mechanism.

In the brake system 100 in this embodiment, while the front-wheel brake mechanism 20 includes the friction brake mechanism, the rear-wheel brake mechanism 40 does not include the friction brake mechanism, and the friction braking force is generated only on the front wheel 3.

The brake system 100 in this embodiment includes the operation element, which is operated by the rider's hand, as the one operation element 11 that is common to the rear-wheel brake mechanism, which generates the friction braking force only on the front wheel 3.

In this embodiment, the brake system 100 includes the operation element 11 that is operated by the rider's hand. However, the brake system may include an operation element that is operated by a part other than the rider's hand, such as the rider's foot.

### <Effects of Brake System>

Conventionally, as the brake system for the straddle-type vehicle of the rear-wheel-drive type in which the rear wheel is driven by the electric motor, the following brake system is available. The brake system includes: the regenerative brake mechanism that applies the regenerative torque to the rear wheel and thereby brakes the rear wheel, the regenerative torque being generated when the electric motor functions as the generator by the rotary power of the rear wheel; and the friction brake mechanism that generates the friction force on the front wheel in response to the operation of the brake lever by the rider, so as to brake the front wheel. In the brake system with such a configuration, for example, when the free capacity for storing the electric power in the battery that stores the electric power generated by the electric motor is reduced, when the rotational frequency of the rear wheel is reduced, or the like, the regenerative torque is possibly reduced due to the reduction in the electric power that can be generated by the electric motor, or the regenerative torque is possibly not generated due to lack of the electric power generation by the electric motor. As a result, the braking force for the two-wheeled motor vehicle possibly becomes insufficient, and the safety of the two-wheeled motor vehicle possibly deteriorate.

To handle such a problem, the two-wheeled motor vehicle 10 in this embodiment is the straddle-type vehicle of the rear-wheel-drive type in which the rear wheel 4 is driven by the electric motor 5. The brake system 100 for the two-wheeled motor vehicle 10 includes: the front-wheel brake mechanism 20 that brakes the front wheel 3 of the two-wheeled motor vehicle 10; the rear-wheel brake mechanism 40 that brakes the rear wheel 4; and the operation element 11 that is operated by the rider of the two-wheeled motor vehicle 10. The front-wheel brake mechanism 20 includes the friction brake mechanism 21 that generates the friction braking force only on the front wheel 3, and can generate the friction braking force in response to the motion of the operation element 11. The rear-wheel brake mechanism 40 does not include the friction brake mechanism, but includes the electric motor 5 as the regenerative brake mechanism that generates the regenerative braking force on the rear wheel **4.** The front-wheel brake mechanism 20 can further increase or reduce the friction braking force generated by the friction brake mechanism 21 regardless of the motion of the operation element 11.

With such a configuration, the front-wheel brake mechanism 20 includes the friction brake mechanism 21 that generates the friction braking force only on the front wheel 3, and can increase or reduce the friction braking force by the friction brake mechanism 21 regardless of the motion of the operation element 11. Accordingly, it is possible to improve the safety of the two-wheeled motor vehicle 10 by increasing or reducing the friction braking force that is applied to the front wheel 3 regardless of the motion of the operation element 11. In addition, the friction braking force that is applied to the front wheel 3 is increased or reduced regardless of the motion of the operation element 11. Accordingly, compared to a case where the braking force applied to the rear wheel 4 is increased or reduced, it is possible to improve the stability of the two-wheeled motor vehicle 10.

In the brake system 100 in this embodiment, the friction brake mechanism 21 that is provided to the front-wheel brake mechanism 20 includes: the master cylinder 23 that generates the hydraulic pressure to the brake fluid in response to the motion of the operation element 11; the wheel cylinder 26 that is connected to the master cylinder 23 and receives the hydraulic pressure of the brake fluid; the friction application device 22 that applies the friction force to the front wheel 3 according to the hydraulic pressure in the wheel cylinder 26; and the hydraulic pressure adjustment unit 30 that adjusts the hydraulic pressure in the wheel cylinder 26. The hydraulic pressure adjustment unit 30 includes: the outlet valve 32 through which the brake fluid in the wheel cylinder 26 is released; and the pump 35 that causes the movement of the brake fluid in the fluid path 25 to increase the hydraulic pressure in the wheel cylinder 26. When the friction braking force to be applied to the front wheel 3 is reduced, the outlet valve 32 is opened to release the brake fluid in the wheel cylinder 26, and the hydraulic pressure in the wheel cylinder 26 is thereby reduced. When the friction braking force is increased, the brake fluid moves to the wheel cylinder 26 by driving the pump 35, and the hydraulic pressure in the wheel cylinder 26 is increased.

With such a configuration, in the brake system 100, the hydraulic pressure adjustment unit 30 can increase or reduce the hydraulic pressure of the brake fluid in the wheel cylinder 26 regardless of the motion of the operation element 11, and can increase or reduce the friction braking force by the friction brake mechanism 21. In addition, since the friction brake mechanism 21 generates the friction braking force only on the front wheel 3, it is sufficient to dispose the brake fluid pipe, which constitutes the fluid path 25 for connecting the master cylinder 23 and the wheel cylinder 26, in a narrow space, and it is possible to control the braking force, which is applied to the front wheel 3 and has a significant impact on behavior of the two-wheeled motor vehicle 10. Thus, it is possible to improve mountability and ensure the safety simultaneously.

The brake system 100 in this embodiment includes the one operation element 11 that is operated by the rider. With such a configuration, it is possible to improve operability of the brake system 100.

The brake system 100 in this embodiment includes the one operation element 11 that is common to the front-wheel brake mechanism 20, which generates the friction braking force on the front wheel 3, and the rear-wheel brake mechanism 40, which generates the regenerative braking force on the rear wheel 4. With such a configuration, the braking forces can be generated by the front-wheel brake mechanism 20 and the rear-wheel brake mechanism 40 with the operation of the one operation element 11. Thus, it is possible to simplify the rider's operation.

The brake system 100 in this embodiment includes the operation element 11 that is operated by the rider's hand. With such a configuration, the rider can finely adjust the operation of the operation element 11. Thus, it is possible to improve the operability of the brake system 100.

The brake system 100 in this embodiment includes the controller 60 that controls the friction braking force by the friction brake mechanism 21. The controller 60 acquires the requested braking force, which is the requested braking force by the rider and is based on the motion of the operation element 11, and the regenerative braking force, which can be generated by the electric motor 5 as the regenerative brake mechanism, during the execution of the interlocking brake control, for example, compares the requested braking force with the regenerative braking force, and executes the control for generating or increasing the friction braking force by the friction brake mechanism 21 when it is determined that the requested braking force exceeds the regenerative braking force. With such a configuration, in the case where the requested braking force exceeds the regenerative braking force, it is possible to compensate for a shortage of the braking force with the friction braking force by the friction brake mechanism 21.

The brake system 100 in this embodiment includes the controller 60 that controls the friction braking force by the friction brake mechanism 21. The controller 60 acquires the requested braking force, which is the requested braking force by the rider and is based on the motion of the operation element 11, during the execution of the interlocking brake control, for example, and executes control for generating the braking force by each of the brake mechanisms by dividing the requested braking force into the friction braking force by the front-wheel brake mechanism and the regenerative braking force by the rear-wheel brake mechanism at the specified ratio. With such a configuration, the requested braking force by the rider is generated by being divided into the friction braking force by the front-wheel brake mechanism and the regenerative braking force by the rear-wheel brake mechanism at the specified ratio. Thus, it is possible to improve the stability of the behavior of the two-wheeled motor vehicle 10 during braking.

The brake system 100 in this embodiment includes the controller 60 that controls the friction braking force by the friction brake mechanism 21. The controller 60 executes the control for generating or increasing the friction braking force by the friction brake mechanism 21 on the front wheel 3 by the lock control operation when the rear wheel is locked or is possibly locked by the regenerative braking force on the basis of rotational frequency information on the rotational frequency of the rear wheel 4, for example. With such a configuration, it is possible to improve the stability of the behavior of the two-wheeled motor vehicle 10 during braking.

The brake system 100 in this embodiment includes the controller 60 that controls the friction braking force by the friction brake mechanism 21. The controller 60 executes the control for generating or increasing the friction braking force by the friction brake mechanism 21 on the front wheel 3 by the slippage control operation when the rear wheel 4 slips or possibly slips due to the regenerative braking force during the turning travel of the two-wheeled motor vehicle 10, for example. With such a configuration, it is possible to improve the stability of the behavior of the two-wheeled motor vehicle 10 at the time of regenerative braking during the turning travel of the two-wheeled motor vehicle 10.

In this embodiment, the brake system 100 includes the one operation element 11 that is common to the front-wheel brake mechanism 20 and the rear-wheel brake mechanism 40. However, the brake system may include a first operation element as the operation element and a second operation element as the operation element that differs from the first operation element, the front-wheel brake mechanism may be operated by the first operation element, and the rear-wheel brake mechanism may be operated by the second operation element. With such a configuration, it is possible to separately adjust the braking forces by the front-wheel brake mechanism and the rear-wheel brake mechanism on the basis of operation states of the first operation element and the second operation element, respectively.

### <Second Embodiment>

Configurations of the straddle-type vehicle and the brake system in this embodiment each include the same configuration in the above-described first embodiment. Thus, a description herein will mainly be made on different points therefrom. The same configuration as that in the first embodiment may not be described.

The brake system 100 in the first embodiment includes, in the front-wheel brake mechanism 20, the friction application device 22, the master cylinder 23, the reservoir 24, the fluid path 25, the wheel cylinder 26, the hydraulic pressure adjustment unit 30, and the like as the friction brake mechanism 21 that generates the friction braking force only on the front wheel 3. The friction material of the friction application device 22 moves to apply the friction braking force to the front wheel 3 according to the hydraulic pressure of the brake fluid that is supplied from the master cylinder 23 and the reservoir 24 to the wheel cylinder 26 via the fluid path 25 and the hydraulic pressure adjustment unit 30. Meanwhile, the brake system 100 in the second embodiment includes, as a friction brake mechanism 70 in the front-wheel brake mechanism 20: an actuator 74 that causes a spindle 73 to move on the basis of the control signal from the controller 60; and a friction application unit 71 that applies the friction force to the front wheel 3 when a friction material 72 moves according to movement of the spindle 73.

A description will be made on the second embodiment of the brake system according to the invention and the straddle-type vehicle including the brake system with reference to the drawings.

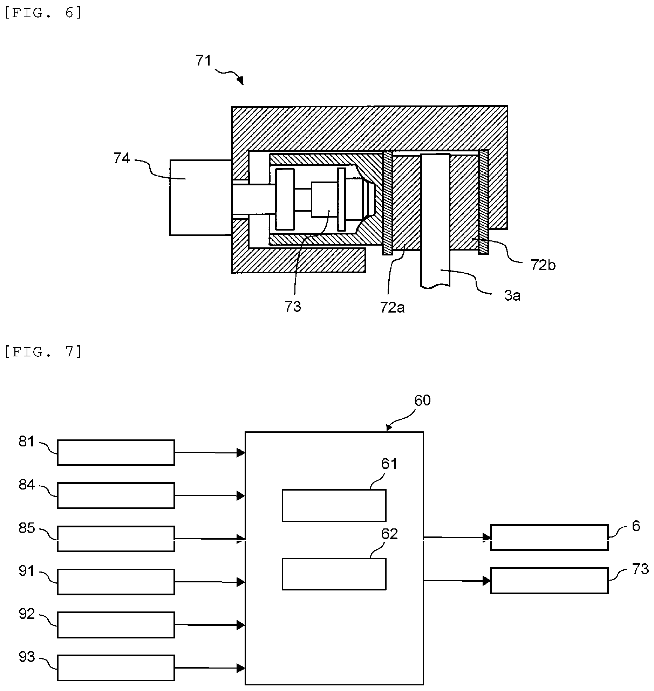

Fig. 5 is a view for explaining the brake system according to the second embodiment. Fig. 6 is a view for explaining a friction application unit in the brake system according to the second embodiment. Fig. 7 is a diagram for explaining a system configuration of the brake system according to the second embodiment.

### <Regarding Brake System>

As illustrated in Fig. 5, the brake system 100 includes: the one operation element 11 that is operated by the rider of the two-wheeled motor vehicle 10; the front-wheel brake mechanism 20 that brakes the front wheel 3; the rear-wheel brake mechanism 40 that brakes the rear wheel 4; and the controller 60 that controls the braking forces on the front wheel 3 and the rear wheel 4, and is mounted to the two-wheeled motor vehicle 10 as the straddle-type vehicle.

The operation element 11 is constructed as the brake lever that is provided to the handlebar 2, and is operated by the rider's hand. In the above-described first embodiment, the operation element 11 is hydraulically connected to the front-wheel brake mechanism 20. Meanwhile, in this embodiment, the operation element 11 is not hydraulically connected to the front-wheel brake mechanism 20, but an operation element motion sensor 84, which will be described below, is connected to the operation element 11.

The front-wheel brake mechanism 20 presses the friction material 72 of the friction application unit 71, which is held by the trunk 1, against the disc rotor 3a that rotates with the front wheel 3 and to generate or increase the friction braking force for braking the front wheel 3 with the friction force that corresponds to the operation amount of the operation element 11.

As illustrated in Fig. 6, the friction application unit 71 is configured as a floating caliper and includes: the friction material 72; the spindle 73 that adjusts a distance of the friction material 72 to the disc rotor 3a; and the actuator 74 that generates linear motion of the spindle 73.

The friction material 72 includes a pair of friction materials 72a, 72b that hold the disc rotor 3a therebetween, and generates the friction force when an opposing surface of each of the friction materials 72a, 72b, which oppose the disc rotor 3a, abuts the disc rotor 3a of the front wheel 3.

The spindle 73 is coupled to the actuator 74, can make the linear motion, and adjusts the distance of the friction material 72 to the disc rotor 3a by the linear motion. The linear motion of the spindle 73 may be transmitted to the friction material 72 via an elastic member or may be transmitted to the friction member 72 via a fluid such as a hydraulic fluid. Hereinafter, of directions of the linear motion of the spindle 73, a direction in which the distance of the friction material 72 to the disc rotor 3a is reduced may be referred to as a first direction, and an opposite direction from the first direction may be referred to as a second direction.

The actuator 74 is a motor, for example, and generates the linear motion of the spindle 73 in response to the control signal from the controller 60, so as to adjust a distance between the friction material 72 and the spindle 73. In addition, the actuator 74 is attached to an outer side of the friction application unit 71 and is unitized with the friction application unit 71. The friction application unit 71 may have another structure. For example, the friction application unit 71 may be configured as an opposing caliper. In addition, for example, the actuator 74 may be installed in the friction application unit 71.

In the friction application unit 71, when the actuator 74 causes the spindle 73 to move in the first direction, the distance of the friction material 72 to the disc rotor 3a is reduced, the friction material 72 is pressed against the disc rotor 3a, and the friction braking force is thereby increased. Meanwhile, when the actuator 74 causes the spindle 73 to move in the second direction, the distance of the friction material 72 to the disc rotor 3a is increased, the friction material 72 moves away from the disc rotor 3a, and the friction braking force is thereby reduced.

As illustrated in Fig. 7, the controller 60 includes: a first control section 63 that controls operation of the actuator 74 in the friction application unit 71 provided to the front-wheel brake mechanism 20; and the second control section 62 that controls the operation of the electric motor 5 as the generator provided to the rear-wheel brake mechanism 40.

The controller 60 receives the output signals from the front wheel rotational frequency sensor 81, the operation element motion sensor 84, a friction material motion sensor 85, the rear wheel rotational frequency sensor 91, the stored electric power residual amount sensor 92, the surrounding environment sensor 93, and the like in the wired or wireless manner, for example. The controller 60 may also receive output signals from other sensors. As in the above-described first embodiment, the controller 60 derives the target braking force to be generated on each of the front wheel 3 and the rear wheel 4 on the basis of the output signals from those sensors. The first control section 61 outputs the command signal, which corresponds to the target braking force to be generated on the front wheel 3, to the driver in the actuator 74 in the wired or wireless manner. The second control section 62 outputs the command signal, which corresponds to the target braking force to be generated on the rear wheel 4, to the controller, which controls the electric power for charging the electric power storage device, in the wired or wireless manner.

The operation element motion sensor 84 detects the motion of the operation element 11 that is generated when being operated by the rider. The operation element motion sensor 84 is held by the trunk 1, for example. Any type of an operation element motion sensor can be adopted as the operation element motion sensor 84 as long as it detects the physical quantity to which the desired braking force by the rider is reflected. For example, the operation element motion sensor 84 may detect the operation amount of the operation element 11 by the rider or may detect a force that is applied to the operation element 11 by the rider. Alternatively, the operation element motion sensor 84 may detect another physical quantity that can substantially be converted to the operation amount of the operation element 11 or the force applied to the operation element 11.

The friction material motion sensor 85 detects motion of the friction material 72 of the friction application unit 71. The friction material motion sensor 85 is held by the friction application unit 71, for example. Any type of the friction material motion sensor can be adopted as the friction material motion sensor 85 as long as it detects a physical quantity to which the braking force generated on the front wheel 3 by the friction application unit 71 is reflected. For example, the friction material motion sensor 85 may detect a drive amount of the actuator 74 or may detect a reaction force that acts on the spindle 73. The friction material motion sensor 85 may detect another physical quantity that can substantially be converted to the drive amount of the actuator 74 or the reaction force that acts on the spindle 73.

The first control section 61 and the second control section 62 are accommodated in a housing of the friction application unit 71, for example. The first control section 61 and the second control section 62 are unitized with the friction material 72, the spindle 73, and the actuator 74. The first control section 61 may be unitized with the operation element motion sensor 84. The second control section 62 may be unitized with the electric motor 5.

When the rider operates the operation element 11 in the state where the two-wheeled motor vehicle 10 is stopped or the two-wheeled motor vehicle 10 travels while the slippage that exceeds the reference value does not occur to the front wheel 3 or the rear wheel 4, that is, during the service braking, the first control section 61 drives the actuator 74 with the drive amount that corresponds to an output signal from the operation element motion sensor 84. When the rider grips and operates the operation element 11, the spindle 73 moves in the first direction due to driving of the actuator 74. As a result, the distance of the friction material 72 in the friction application unit 71 to the disc rotor 3a is reduced, the friction material 72 is pressed against the disc rotor 3a, and the friction braking force to be applied to the front wheel 3 is thereby generated or increased. Meanwhile, when the rider operates to release the operation element 11, the spindle 73 moves in the second direction due to driving of the actuator 74. As a result, the distance of the friction material 72 to the disc rotor 3a is increased, the friction material 72 in the friction application unit 71 moves away from the disc rotor 3a, and the friction braking force to be applied to the front wheel 3 is thereby reduced or eliminated. That is, in the front-wheel brake mechanism 20, during the service braking, the friction force that is applied to the front wheel 3 by the friction application unit 71 varies according to the motion of the operation element 11 when the controller 60 controls the actuator 74 according to the detection result by the operation element motion sensor 84.

In addition, in the state where the friction braking force applied to the front wheel 3 has to be increased as described above, for example, during the execution of the interlocking brake control, during the execution of the lock control operation, during the execution of the slip control operation, during the execution of the stop assistance control operation, during the execution of the emergency braking control operation, or the like, the first control section 61 controls driving of the actuator 74 to cause the spindle 73 to move in the first direction regardless of the output signal from the operation element motion sensor 84. By such control, the distance of the friction material 72 to the disc rotor 3a is reduced, the friction material 72 is pressed against the disc rotor 3a, and the friction braking force is thereby increased. That is, in the front-wheel brake mechanism 20, during the execution of the interlocking brake control, or the like, the friction braking force that is applied to the front wheel 3 by the friction application unit 71 varies by the control of the actuator 74 by the controller 60 regardless of the motion of the operation element 11.

In addition, in the state where the friction braking force applied to the front wheel 3 has to be increased as described above, for example, during the execution of the interlocking brake control, during the execution of the lock control operation, during the execution of the slip control operation, or the like, the first control section 61 controls driving of the actuator 74 to cause the spindle 73 to move in the second direction regardless of the output signal from the operation element motion sensor 84. By such control, the distance of the friction material 72 to the disc rotor 3a is increased, the friction material 72 moves away from the disc rotor 3a, and the friction braking force is thereby reduced. That is, in the front-wheel brake mechanism 20, during the execution of the interlocking brake control, or the like, the friction braking force that is applied to the front wheel 3 by the friction application unit 71 varies by the control of the actuator 74 by the controller 60 regardless of the motion of the operation element 11.

Meanwhile, in the state where the regenerative braking force that is applied to the rear wheel 4 has to be generated or increased, the second control section 62 executes the control for increasing the electric power for charging the electric power storage device, for example, within a range where the electric power can be generated on the basis of a power storage status, and within a range up to the target braking force of the rear-wheel brake mechanism 40, so as to generate or increase the regenerative braking force by the regenerative brake mechanism. In addition, in the state where the regenerative braking force applied to the rear wheel 4 has to be reduced, the second control section 62 executes the control for reducing the electric power for charging the electric power storage device, for example, on the basis of the travel status (for example, the speed, the tilt, and the like) of the two-wheeled motor vehicle 10, the stored power remaining amount, and the like, so as to reduce or eliminate the regenerative braking force by the regenerative brake mechanism.

As it has been described so far, the front-wheel brake mechanism 20 in this embodiment includes the friction brake mechanism 70 (including the friction application unit 71, the actuator 74, and the controller 60) that generates the friction braking force only on the front wheel **3,** and can generate the friction braking force in response to the motion of the operation element 11 during the service braking, for example. In addition, the front-wheel brake mechanism 20 can increase or reduce the friction braking force by the friction brake mechanism 70 regardless of the motion of the operation element 11 in the interlocking brake control, the lock control operation, the slippage control operation, the stop assistance control operation, the emergency braking control operation, and the like executed by the controller 60, for example.

### <Effects of Brake System>

In the brake system 100 in this embodiment, the friction brake mechanism 70 provided to the front-wheel brake mechanism 20 includes: the actuator 74 controlled by the controller 60; and the friction application unit 71 that applies the friction force to the front wheel 3 when the friction material 72 moves in response to the movement of the spindle 73 caused by the actuator 74. The friction material 72 moves in the direction to be pressed against the front wheel 3 in response to the movement of the spindle 73 in the first direction when the friction braking force applied to the front wheel 3 is increased. The friction material 72 moves in the direction away from the front wheel 3 in response to the movement of the spindle 73 in the second direction opposite from the first direction when the friction braking force is reduced.

With such a configuration, in the brake system 100, it is possible to increase or reduce the friction braking force by the friction brake mechanism 70 regardless of the motion of the operation element 11. In addition, when the actuator 74 is controlled by the controller 60, the friction brake mechanism 70 can increase or reduce the friction braking force and generate the friction braking force only on the front wheel 3. Accordingly, it is sufficient to dispose a control line for connecting the controller 60 and the actuator 74 in the narrow space, and it is possible to control the braking force, which is applied to the front wheel 3 and has the significant impact on the behavior of the two-wheeled motor vehicle 10. Thus, it is possible to improve the mountability and ensure the safety simultaneously.

The brake system 100 in this embodiment includes the controller 60 that controls the friction braking force by the friction brake mechanism 70. The controller 60 acquires the requested braking force, which is the requested braking force by the rider and is based on the motion of the operation element 11, and the regenerative braking force, which can be generated by the electric motor 5 as the regenerative brake mechanism, during the execution of the interlocking brake control, for example. The controller 60 compares the requested braking force with the regenerative braking force, and executes the control for generating or increasing the friction braking force by the friction brake mechanism 21 when it is determined that the requested braking force exceeds the regenerative braking force. With such a configuration, in the case where the requested braking force exceeds the regenerative braking force, it is possible to compensate for the shortage of the braking force with the friction braking force by the friction brake mechanism 70.

The brake system 100 in this embodiment includes the controller 60 that controls the friction braking force by the friction brake mechanism 70. The controller 60 acquires the requested braking force, which is the requested braking force by the rider and is based on the motion of the operation element 11, during the execution of the interlocking brake control, for example, and executes the control for dividing the requested braking force into the friction braking force by the front-wheel brake mechanism and the regenerative braking force by the rear-wheel brake mechanism at the specified ratio, so as to generate the braking force by each of the brake mechanisms. With such a configuration, the requested braking force by the rider is divided into the friction braking force by the front-wheel brake mechanism and the regenerative braking force by the rear-wheel brake mechanism at the specified ratio, and is thereby generated. Thus, it is possible to improve the stability of the behavior of the two-wheeled motor vehicle 10 during braking.

The brake system 100 in this embodiment includes the controller 60 that controls the friction braking force by the friction brake mechanism 70. The controller 60 executes the control for generating or increasing the friction braking force by the friction brake mechanism 70 for the front wheel 3 by the lock control operation, for example, when the rear wheel is locked or possibly locked by the regenerative braking force on the basis of the rotational frequency information on the rotational frequency of the rear wheel **4.** With such a configuration, it is possible to improve the stability of the behavior of the two-wheeled motor vehicle 10 during braking.

The brake system 100 in this embodiment includes the controller 60 that controls the friction braking force by the friction brake mechanism 70. The controller 60 executes the control for generating or increasing the friction braking force by the friction brake mechanism 70 for the front wheel 3 by the slippage control operation when the rear wheel 4 slips or possibly slips due to the regenerative braking force during the turning travel of the two-wheeled motor vehicle 10, for example. With such a configuration, it is possible to improve the stability of the behavior of the two-wheeled motor vehicle 10 at the time of the regenerative braking during the turning travel of the two-wheeled motor vehicle 10.

The description has been made so far on the brake system according to the embodiment. However, the brake system according to the invention is not limited to that in the description of the embodiment. For example, only a part of the embodiment may be implemented.

### Reference Signs List

1: Trunk
2: Handlebar
3: Front wheel
4: Rear wheel
5: Electric motor
6: Power supply unit
10: Two-wheeled motor vehicle
11: Operation element
20: Front-wheel brake mechanism
21: Friction brake mechanism
22: Friction application device
23: Master cylinder
24: Reservoir
25: Fluid path
26: Wheel cylinder
30: Hydraulic pressure adjustment unit
31: Base body
32: Inlet valve
33: Outlet valve
34: Accumulator
35: Pump
36: Motor
37: Housing
38: Switching valve
39: Booster regulator
40: Rear-wheel brake mechanism
60: Controller
61: First control section
62: Second control section
70: Friction brake mechanism
71: Friction application unit
72: Friction material
73: Spindle
74: Actuator
81: Front-wheel rotational frequency sensor
82: First brake hydraulic pressure sensor
83: Second brake hydraulic pressure sensor
84: Operation element motion sensor
85: Friction material motion sensor
91: Rear-wheel rotational frequency sensor
92: Stored power residual amount sensor
93: Surrounding environment sensor
100: Brake system

## Claims

1. A brake system (100) for a straddle-type vehicle (10) of a rear-wheel-drive type, the brake system comprising:
a front-wheel brake mechanism (20) that brakes a front wheel (3) of the straddle-type vehicle (10);
a rear-wheel brake mechanism (40) that brakes a rear wheel (4) of the straddle-type vehicle (10); and
an operation element (11) that is operated by a rider of the straddle-type vehicle (10), wherein
the front-wheel brake mechanism (20) includes a friction brake mechanism (21, 70) that generates a friction braking force only on the front wheel (3), and can generate the friction braking force in response to motion of the operation element (11),
the rear-wheel brake mechanism (40) does not include a friction brake mechanism but includes a regenerative brake mechanism (5) that generates a regenerative braking force on the rear wheel (4), and
the front-wheel brake mechanism (20) can further increase or reduce the friction braking force by the friction brake mechanism (21, 70) regardless of the motion of the operation element (11).

2. The brake system (100) according to claim 1, wherein
the friction brake mechanism (21) includes:
a master cylinder (23) that generates a hydraulic pressure in a brake fluid in response to the motion of the operation element (11);
a wheel cylinder (26) that is connected to the master cylinder (23) and into which the brake fluid flows;
a friction application device (22) that applies a friction force to the front wheel (3) according to a hydraulic pressure in the wheel cylinder (26);
an outlet valve (32) through which the brake fluid in the wheel cylinder (26) is released; and
a pump (35) that causes movement of the brake fluid to increase the hydraulic pressure in the wheel cylinder (26), wherein
when the friction braking force is reduced, the hydraulic pressure in the wheel cylinder (26) is reduced by opening the outlet valve (32), and
when the friction braking force is increased, the brake fluid moves into the wheel cylinder (26), and the hydraulic pressure in the wheel cylinder (26) is increased by driving the pump (35).

3. The brake system (100) according to claim 1, wherein
the friction brake mechanism (70) includes:
an actuator (74) that causes a spindle (73) to move; and
a friction application device (71) that causes a friction material (72) to move in response to movement of the spindle (73) and thereby applies a friction force to the front wheel (3), wherein
when the friction braking force is increased, the friction material (72) moves in a direction to be pressed against the front wheel (3) in response to movement of the spindle (73) in a first direction, and
when the friction braking force is reduced, the friction material (72) moves in a direction away from the front wheel (3) in response to movement of the spindle (73) in a second direction that is opposite from the first direction.

4. The brake system (100) according to any one of claims 1 to 3, wherein
the operation element (11) is a common operation element for the front-wheel brake mechanism (20) and the rear-wheel brake mechanism (40).

5. The brake system (100) according to claim 4, wherein
the one operation element (11) is provided.

6. The brake system (100) according to any one of claims 1 to 3, wherein
the operation element (11) is an operation element that is operated by the rider's hand.

7. The brake system (100) according to any one of claims 1 to 3 further comprising:
a first operation element as the operation element; and
a second operation element that is the operation element and differs from the first operation element, wherein
the front-wheel brake mechanism is operated by the first operation element, and
the rear-wheel brake mechanism is operated by the second operation element.

8. The brake system (100) according to any one of claims 1 to 3 further comprising:
a controller (60) that controls the friction braking force by the friction brake mechanism (21, 70), wherein
in the case where it is determined that a braking force that is requested by the rider and is based on the motion of the operation element (11) exceeds the regenerative braking force by the regenerative brake mechanism (5), the controller (60) executes control for generating or increasing the friction braking force by the friction brake mechanism (21, 70).

9. The brake system (100) according to any one of claims 1 to 3 further comprising:
a controller (60) that controls the friction braking force by the front-wheel brake mechanism (20) and the regenerative braking force by the rear-wheel brake mechanism (40), wherein
the controller (60) divides a braking force that is requested by the rider and is based on the motion of the operation element (11) into the friction braking force by the front-wheel brake mechanism (20) and the regenerative braking force by the rear-wheel brake mechanism (40), and thereby controls the braking force.

10. The brake system (100) according to any one of claims 1 to 3 further comprising:
a controller (60) that controls the friction braking force by the front-wheel brake mechanism (20), wherein
the controller (60) executes control for generating or increasing the friction braking force by the friction brake mechanism (21, 70) for the front wheel (3) when the rear wheel (4) is locked or possibly locked by the regenerative braking force.

11. The brake system (100) according to any one of claims 1 to 3 further comprising:
a controller (60) that controls the friction braking force by the front-wheel brake mechanism (20), wherein
the controller (60) executes control for generating or increasing the friction braking force by the friction brake mechanism (21, 70) for the front wheel (3) when the rear wheel (4) slips or possibly slips by the regenerative braking force during turning travel of the straddle-type vehicle (10).

12. A straddle-type vehicle (10) comprising:
the brake system (100) according to any one of claims 1 to 3.
